# EUROPEAN PATENT APPLICATION

(11) **EP 4 685 514 A1**
(43) Date of publication of application: **28.01.2026**
(21) Application number: 25190221.9
(22) Date of filing: 17.07.2025
(51) Int. Cl.: G01S 7/02, G01S 13/931, G01S 7/481, G01S 7/521, G01S 17/931, G01S 15/931

(54) **IMPROVED SUPPORT SYSTEM FOR A VEHICULAR SENSOR ASSEMBLY**

(30) Priority: 23.07.2024 IT 202400017080
(71) Applicant: IVECO S.P.A., 10156 Torino (IT)
(72) Inventor: VIOLI, Saverio, 10156 TORINO (IT); CONIGLIO, Fabio, 10156 TORINO (IT)
(74) Representative: Studio Torta S.p.A.

(57) **Abstract**

Sensor assembly (3) for a vehicle (1), the sensor assembly (3) comprising a base portion (5) configured to be fixed to a wall (2) of the vehicle (1), a housing portion (8) and a tilting portion (9), the housing portion (8) being configured to house at least one sensor (S), the tilting portion (9) rigidly carrying said housing portion (8), the sensor assembly (3) comprising a support system (7) configured to connect the tilting portion (9) so as to adjust the relative position between said tilting portion (9) and the base portion (5).

## Description

### CROSS-REFERENCE TO RELATED APPLICATIONS

This patent application claims priority from Italian patent application no. 102024000017080, filed on July 23, 2024, the entire disclosure of which is incorporated herein by reference.

### TECHNICAL FIELD

The present invention relates to a support system, in particular a support system for a vehicular sensor assembly.

The present invention has its preferred, although not exclusive, application in a vehicular sensor assembly of the ADAS (advanced driving assistance systems) type. Reference will be made to this application below by way of an example.

### PRIOR ART

It is known that vehicles are being increasingly equipped with assistance systems, otherwise known as "ADAS" (Advanced driving assistance systems). Such systems, as known, are adapted to support the driving of a vehicle, providing the driver with signals relating to safety or allowing driving automations increasingly serving to improve the safety of driving.

One of these ADAS systems is the radar used laterally to detect the presence of other vehicles or obstacles along the vehicle, for example in the so-called blind spot.

Such sensor system is installed in a specific zone of the vehicle, for example laterally integrated into a wall of the vehicle, so as to allow the acquisition of data on the road space facing said wall, and therefore laterally to the vehicle.

However, it is clear that the sensor means must be installed with a specific inclination, so as to vary the visual field thereof, in order to be able to be adapted to the specific vehicle type/set-up.

It is therefore necessary to be able to calibrate the sensor system and fix it more precisely inside its housing for each different vehicular set-up and configuration, with a consequent waste of time and increase in costs.

In particular, checking the correct inclination is particularly expensive and imprecise, as it is performed by means of manual adjustment mechanisms.

There is therefore a need to solve the aforesaid problems in a manner to be able to fix the sensor system inside a relative housing in a quick and economical manner, guaranteeing the correct positioning thereof.

The object of the present invention is therefore to satisfy the needs indicated here above, in an optimal and economical manner.

### SUMMARY OF THE INVENTION

The aforesaid object is achieved by a sensor assembly and a vehicle as claimed in the appended claims, which form an integral part of the present description.

### BRIEF DESCRIPTION OF THE DRAWINGS

For a better understanding of the present invention, a preferred embodiment is described below, by way of nonlimiting example and with reference to the appended drawings, in which:
- Figure 1 is a schematic view of a vehicle comprising a sensor assembly according to the invention;
- Figure 2 is a perspective view of the sensor assembly according to the invention;
- Figure 3 is a partially exploded perspective view of the sensor assembly of Figure 2;
- Figure 4 is a perspective view, with parts removed for clarity, of the sensor assembly of Figure 2;
- Figure 5 is an exploded perspective view of the sensor assembly of Figure 2;
- Figures 6 and 7 are respectively a side view and a front view of the sensor assembly according to the invention;
- Figures 8 and 9 are longitudinal section views, respectively, of lines VIII-VIII and IX-IX of Figure 7; and
- Figure 10 is a cross-sectional perspective view of an alternative embodiment of a portion of the sensor assembly according to the invention.

### DETAILED DESCRIPTION OF THE INVENTION

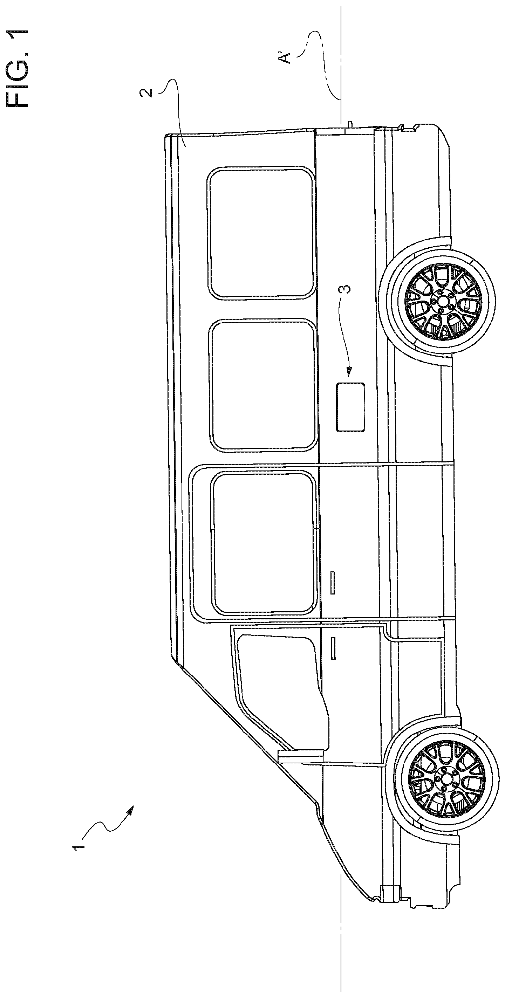

In Figure 1, a vehicle 1 is shown by way of example, such as a Light Commercial Vehicle (LVC), extending along a relative longitudinal axis A' and comprising a plurality of walls 2 connected to each other.

The vehicle 1 comprises a sensor assembly 3 according to the invention, carried by one of the walls 2. In the embodiment illustrated, the sensor assembly 3 is carried by a side wall 2 of the vehicle 1, but it is clear that it could be carried by a different wall.

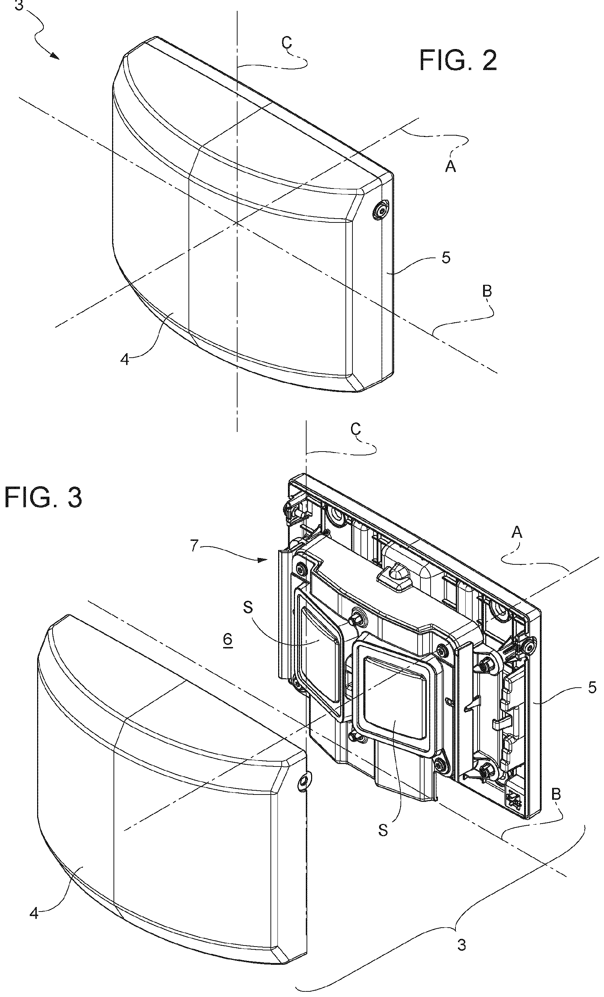

As is more clearly visible in Figures 2 and 3, the sensor assembly 3 comprises a base portion 5 configured to be fixed to the wall 2 of the vehicle 1 and a cover 4 configured to be selectively fixed, for example by means of coupling means, of the threaded type or pins, to the base portion 5 so as to define a space 6 housing at least one sensor S.

The cover 4 is advantageously made of a radiotransparent material used by at least one sensor S housed in the space 6.

The sensor assembly 3 extends along respective longitudinal, transversal and vertical axes A, B, C. In the embodiment described, the coupling between the cover 4 and the base portion 5 is obtained along the longitudinal axis A, whereas both the cover 4 and the base portion 5 extend further along the transversal and vertical axes B, C.

The at least one sensor S is carried by a support system 7 configured to be fixed, adjustably, with respect to the base portion 5.

In detail, the assembly 3 comprises a housing portion 8 configured to house the sensors S and a tilting portion 9 rigidly connected to the housing portion 8 and configured to be fixed, adjustably, to the base portion 5.

Preferably, the housing portion 8 is fixed to the tilting portion 9 by means of a plurality of connection elements 11, such as threaded elements.

Advantageously, the tilting portion 9 is connected by means of a support system 7 configured to vary its inclination with respect to at least one of the transversal axes B, C, with respect to the base portion 5. In the embodiment illustrated, the tilting portion 9 is configured to oscillate around the vertical axis C.

In detail, the support system 7 comprises a fulcrum coupling 12 configured to allow oscillation around one, or several, axes of the tilting portion 9.

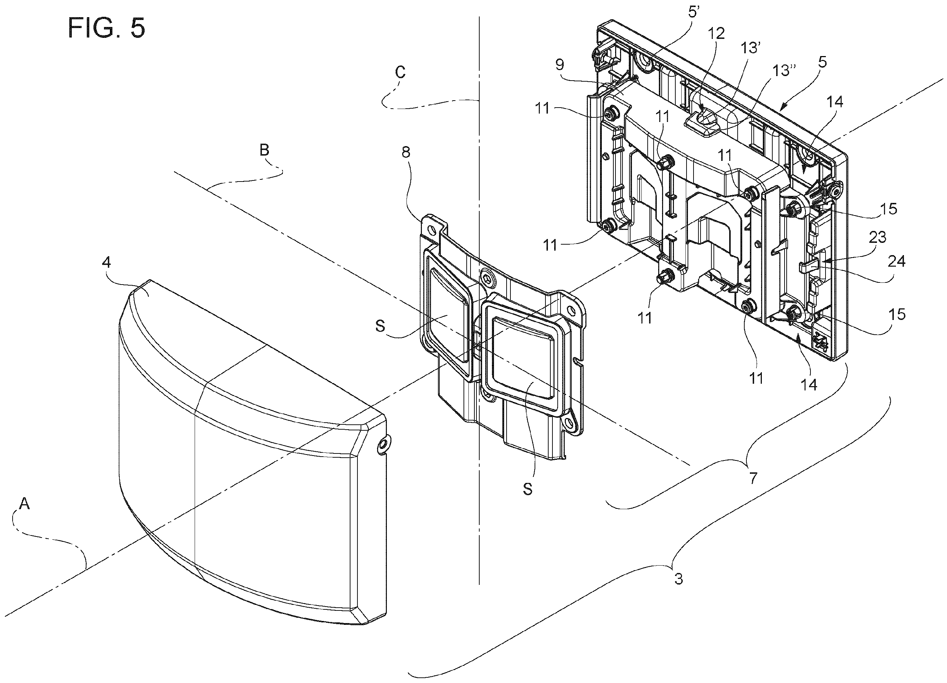

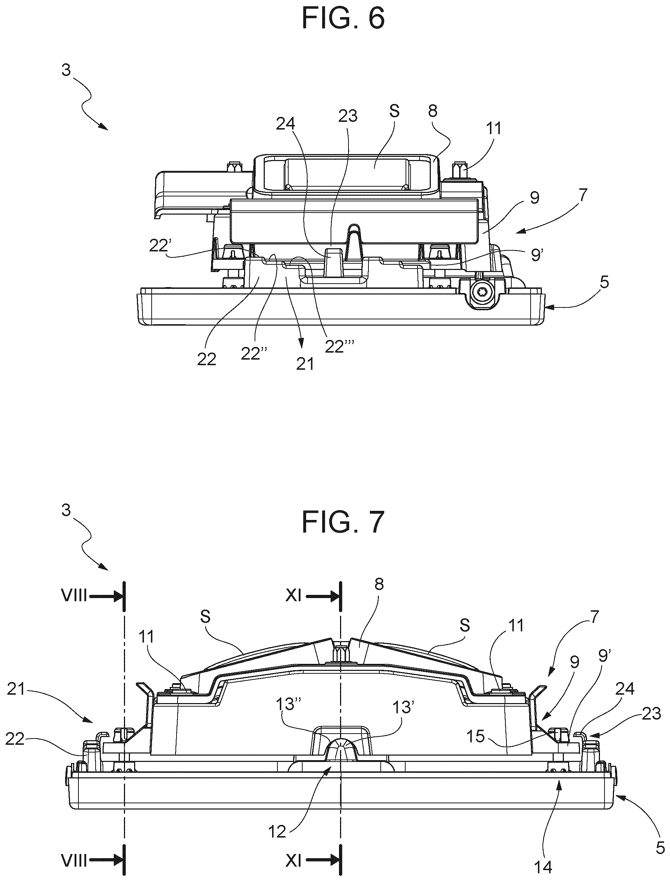

In the embodiment illustrated, as visible in Figures 5 and 7, the fulcrum coupling 12 is configured to allow an oscillation around the vertical axis C and comprises a protuberance 13', linear along the vertical axis C extending from a bottom wall 5' of the base portion 5, configured to cooperate in contact within a seat 13''. Both the protuberance 13' and the seat 13" have a curved shape so as to allow an oscillation around the aforesaid axis.

Furthermore, the support system 7 comprises an adjustable fastening mechanism 14 for fixing to the base portion 5, in particular to the bottom wall 5'.

In detail, such adjustable fastening mechanism 14 is configured to vary the distance between the tilting portion 9 and the bottom wall 5'.

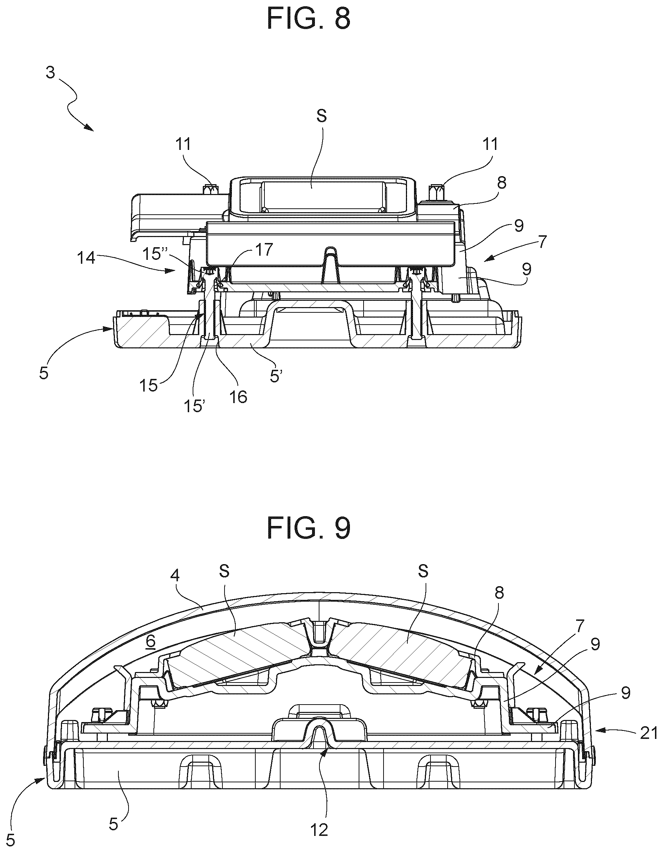

In the embodiment described, as visible in Figures 7, 8 and 9, such adjustable fastening mechanism 14 comprises calibrated screws 15 configured to be inserted, by means of a threaded coupling, in respective seats 16, carried by the bottom wall 5' and passing through corresponding openings 17 on the tilting portion 9.

In detail, such calibrated screws 15 comprise a threaded portion 15' configured to cooperate with the seats 16, as indicated above, and an adjustment head 15'' operatively connected to the threaded portion 15'.

Advantageously, a rotation of the head 15'' of the calibrated screws 15, complete around its own axis of rotation, allows the inclination of the tilting portion 9 to be varied by a pre-set angle with respect to the base portion 5, i.e**.** to vary by a pre-set distance the tilting portion 9 from the base portion 5'.

In detail, the head 15" is deformable so as to snap into place in respective openings 17 and act as an axial abutment, along the vertical axis, for the tilting portion 9.

In the embodiment described, the tilting portion 9 has a substantially quadrangular shape, as does the base portion 5, and therefore four calibrated screws 15 are provided, located at the vertices of said shape.

As more visible in Figures 6, 7 and 9, the support system 3 comprises an adjustment system 21 configured to check the correct position of the tilting portion 9, i.e. its inclination with respect to the axis around which it oscillates.

In detail, the adjustment system 21 comprises a shaped portion 22 defining at least one height indicating the predetermined inclination of the tilting portion 9 with respect to the base portion 5.

In particular, such indication is provided when a portion of the tilting portion 9 is corresponding with, in particular coplanar to, a height of said shaped portion 22.

Advantageously, the shaped portion 22 extends along a vertical axis C from the bottom wall 5 and is preferably made in one piece with it.

In the embodiment described, it defines three heights 22', 22'', 22‴, corresponding with different inclinations of the tilting portion 9 around the axis C.

Preferably, the at least one height 22', 22'', 22‴ has, written on it, a visual indication, for example written or in relief, of the corresponding inclination value.

In detail, therefore, the height 22', 22'', 22‴ is defined by a surface of the shaped portion that is, in use, corresponding with or rather coplanar to an indicator portion 9' of the tilting portion 9.

Advantageously, a shaped portion 22 is provided at each screw 15 defined above, so as to facilitate each vertex of the tilting portion 9 being positioned in an angularly correct manner with respect to the base portion 5.

Preferably, the support system 3 comprises an end stop 23 system configured to prevent the relative movement of the tilting portion 9 and the base portion 5 beyond a pre-set limit, in the case described an oscillation of the tilting portion 9 beyond a pre-set angular limit.

Advantageously, such end stop 23 system comprises a protruding element 24, advantageously hook-shaped, extending from the bottom wall 5' of the base portion 5 to cooperate in contact with the tilting portion 9 to prevent a further rotation thereof.

Advantageously, the protruding element 24 cooperates in contact with the indicator portion 9'. In further detail, such protruding element 24 is adjacent to the at least one shaped portion 22.

Preferably, both the base portion 5 and the tilting portion 9 or the connection portion 8 are made of a plastic/polymeric material.

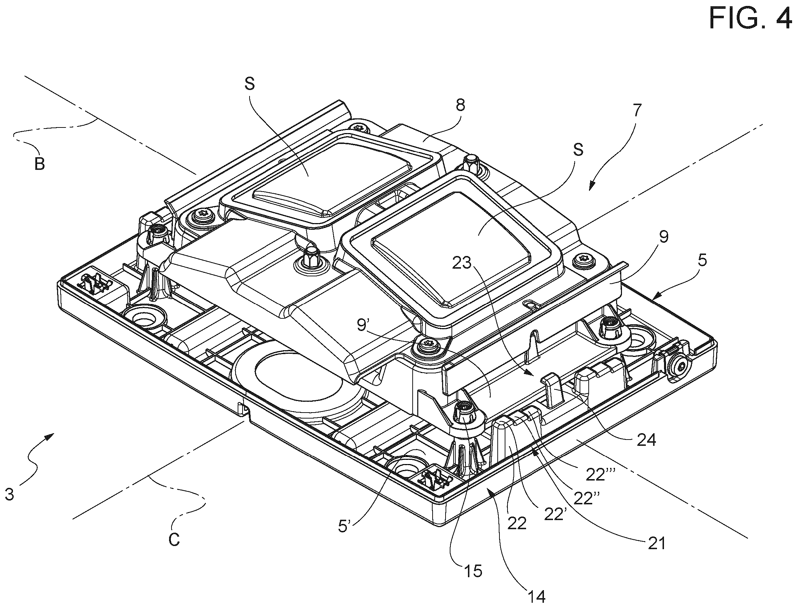

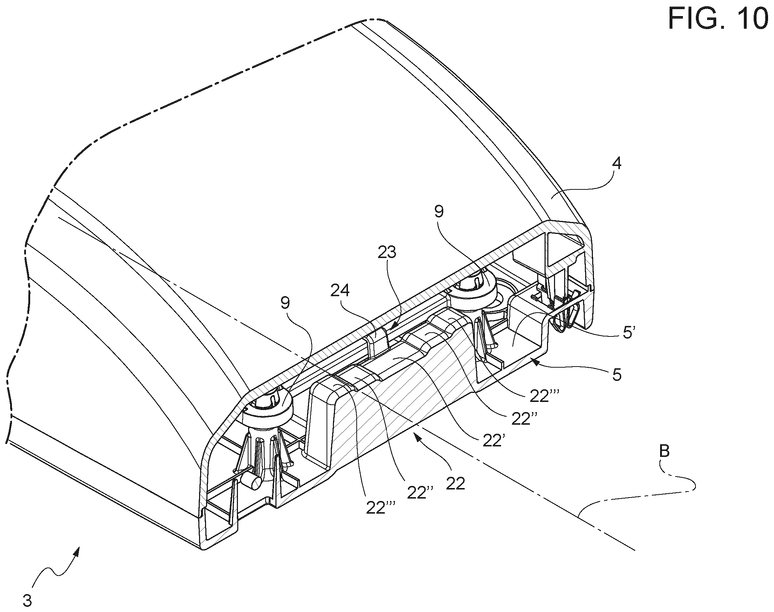

Figure 10 shows an alternative geometry for the shaped portion 22. In contrast with the alternative illustrated in Figures 2 to 9, where a shaped portion for each screw 15 was present, in this embodiment, the two shaped portions of the previous ones are "combined" into a single element.

A shaped portion 22 is therefore provided for each opposite side with respect to the vertical axis C.

In addition, in such alternative, the end stop 23 is integrated into the shaped portion, i.e. the protruding element 24 extends cantilevered from one of the heights 22', 22'', 22‴, in particular from the height 22' indicating the neutral position, i.e. an inclination axis of 0°.

Functioning of the embodiment of the support system and the sensor assembly according to the invention described above is as follows.

In use, the sensors S acquire data in the respective visual field with respect to the outside environment, which is a function of their inclination with respect to the wall 2 of the vehicle 1 that supports them.

In the assembly phase, referring to Figures 5, 8 and 9, for example, it is possible to fix the base portion 5 to the wall 2 of the vehicle, furthermore to fix the housing portion 8, which carries the sensors S, to the tilting portion 9. Subsequently, the tilting portion 9 is snapped onto the calibrated screws 15, on which it is possible to act through rotation. Based on the inclination need with respect to the reference axis of the sensors S, the inclination of the tilting portion 9 is adjusted; in fact, by rotating the calibrated screws 15, the distance of the respective tilting portion 9 is varied, which, pivoting on the fulcrum system 12, allows the rotation thereof. Visualising the coplanarity between the indicator portion 9' and shaped portion 22, it is possible easily to obtain the inclination value of the tilting portion 9. Once the correct position has been reached, the cover 4 can be fixed, thus isolating the sensor means in the space 6.

If there is excessive adjustment, the end stops 24 prevent a further rotation of the tilting portion 9.

The advantages of a sensor assembly and a vehicle according to the invention are clear from the above.

Thanks to the support system of the invention, it is possible to adjust the inclination of the sensor means S in a particularly compact and economical way.

In fact, the tilting portion allows the position of the sensors S to be adjusted without having substantially to alter the structure of the support system, since the base portion can be provided to support different types of sensors, which can be adapted to the tilting portion 9 by means of the housing portion 8, altering only the latter.

Furthermore, visual adjustment of the tilting portion is immediate and easy for the user and does not require particular devices, simultaneously guaranteeing accurate positioning of the sensor means.

Furthermore, the presence of end stops prevents an excessive rotation, which would damage correct functioning of the sensors.

In conclusion, it is clear that changes and variants can be made to the sensor assembly and the vehicle according to the present invention without thus deviating from the scope of protection as defined by the claims.

In particular, the fulcrum mechanism can be replaced with a hinge mechanism or a ball joint mechanism, which allows tilting around one or more axes.

Advantageously, more or fewer heights with respect to the three described can be envisaged and the end stop can be made differently with respect to what is described.

## Claims

1. Sensor assembly (3) for a vehicle (1), said sensor assembly (3) comprising a base portion (5) configured to be fixed to a wall (2) of said vehicle (1), a housing portion (8) and a tilting portion (9), said housing portion (8) being configured to house at least one sensor (S), said tilting portion (9) rigidly carrying said housing portion (8), said sensor assembly (3) comprising a support system (7) configured to connect said tilting portion (9) so as to adjust the relative position between said tilting portion (9) and said base portion (5), wherein said at least one sensor (S) faces along a longitudinal axis (A), said base portion (5), said housing (8) and said tilting portion (9) extending along transversal and vertical axes (B, C) perpendicular to said longitudinal axis (A), said support system (7) being configured to allow said tilting portion (9) to be inclined with respect to at least one of said transversal and vertical axes (B, C),
said assembly comprising at least one shaped portion (22) extending from said base portion (5) towards said tilting portion (9), said shaped portion (2) defining at least one height (22', 22'', 22‴) sized so that, when corresponding to an indicator portion (9') of said tilting portion (9), it indicates a pre-set inclination value of said tilting portion (9) with respect to said base portion (5).

2. Sensor assembly according to claim 1, wherein said at least one height (22', 22", 22‴) includes visual indications indicating the value of said inclination.

3. Sensor assembly according to claim 1 or 2, wherein said shaped portion (22) is made in one piece with said base portion (5).

4. Sensor assembly according to one of the previous claims, further comprising an end stop (23) configured to prevent the movement of the tilting portion (9) beyond a predetermined limit with respect to said base portion (5).

5. Sensor assembly according to claim 4, wherein said end stop (23) includes a protruding element (24) extending from said base portion (5) and configured to prevent rotation of said tilting portion with respect to said at least one of said transversal and vertical axes (B, C) cooperating in contact with a portion of said tilting portion (9).

6. Sensor assembly according to claim 4, wherein said end stop (23) is integrated into said shaped portion (22).

7. Sensor assembly according to claim 5, wherein said protruding element (24) extends starting from one of said heights (22', 22'', 22‴).

8. Sensor assembly according to one of the previous claims, in which said adjustment system (7) includes a fulcrum mechanism (12) operatively interposed between said tilting portion (9) and said base portion (5) to allow said relative movement.

9. Sensor assembly according to claim 8, wherein said fulcrum mechanism (12) comprises a protuberance (13') carried by one of said base portion (5) and said tilting portion (9) and a seat (13'') made on the other between said base portion (5) and said tilting portion (9).

10. Sensor assembly according to claim 8 or 9, wherein said adjustment system (7) further comprises an adjustable fastening mechanism (14) configured to fix, by selectively varying the distance, a portion of said tilting portion (9) to said base portion (5).

11. Assembly according to claim 10, wherein said adjustable fastening mechanism (14) includes calibrated screws (15).

12. Assembly according to claim 11, wherein said calibrated screws (15) comprise a head (15") and a threaded portion (15'), said threaded portion (15') being configured to cooperate in respective openings (16) made in said base portion (5).

13. Assembly according to claim 12, wherein said head (15") is deformable so as to snap into place in respective openings (17) made on said tilting portion (9).

14. Vehicle (1) comprising a plurality of walls (2) connected to each other, and a sensor assembly (3) according to any one any of the previous claims.
